# EUROPEAN PATENT SPECIFICATION

(11) **EP 3 002 183 B1**
(45) Date of publication and mention of the grant of the patent: **27.06.2018**
(21) Application number: 15186265.3
(22) Date of filing: 22.09.2015
(51) Int. Cl.: B62J 6/00, B62J 29/00

(54) **VEHICLE-BODY FRONT STRUCTURE OF MOTORCYCLE**
KAROSSERIEVORDERBAU EINES MOTORRADS
STRUCTURE AVANT DE CARROSSERIE D'UNE MOTOCYCLETTE

(30) Priority: 30.09.2014 JP 2014201299
(43) Date of publication of application: 06.04.2016
(73) Proprietor: HONDA MOTOR CO., LTD., Tokyo, 107-8556 (JP)
(72) Inventor: Yamamoto, Kanta, Saitama, 351-0193 (JP); Yamanaka, Takasumi, Saitama, 351-0193 (JP); Kishi, Hiroshi, Saitama, 351-0193 (JP); Shimoji, Tomotake, Saitama, 351-0193 (JP); Sakurada, Keita, Saitama, 351-0193 (JP)
(74) Representative: Beder, Jens

(56) References cited:
- JP-A- 2006 069 299
- JP-A- 2011 255 725

## Description

The present invention relates to a vehicle-body front structure of a motorcycle in which rear-view mirrors and blinkers are supported on a handle bar support portion.

As a vehicle-body front structure of a motorcycle, there has been known a structure where rear-view mirrors which reflect an area behind a vehicle body are supported on a handle bar support portion mounted on a front portion of a vehicle body frame (see JP-A-2007-185987 A, for example).

In the motorcycle disclosed in JP-A-2007-185987 A, a cover member (cowling) which covers a front side of the handle bar support portion is mounted on the handle bar support portion of the vehicle body frame, and left and right rear-view mirrors which reflect an area behind the vehicle body are mounted on the handle bar support portion by way of stays respectively. Each of the left and right rear-view mirrors includes: a mounting base portion which is mounted on the stay on a handle bar support portion side; and a mirror body holding portion for holding a mirror body, and the mirror body holding portion projects outward from the cover member. The left and right rear-view mirrors are configured such that the mirror body holding portion is rotatably displaceable between a use position where the mirror body holding portion projects sideward and a storing position where the mirror body holding portion falls down rearward or frontward.

In the case of the motorcycle described in JP-A-2007-185987 A, at the time of normal use, the mirror body holding portion of the rear-view mirror is fixed at the use position. At the time of parking or the like, the mirror body holding portion is displaced by rotation to the storing position when necessary thus suppressing the sideward projection of the rear-view mirror.

As a rear-view mirror of a motorcycle, there has been known a rear-view mirror where a blinker is mounted on a surface of a mirror body holding portion which faces an area in front of a vehicle body.

The motorcycle described in Patent Literature 1 has the structure where the mirror body holding portion is made to fall down toward a rear side or toward a front side when the rear-view mirror is not used. Accordingly, in the structure where a blinker is mounted on the mirror body holding portion, when the mirror body holding portion is in a stored state, the blinker mounted on the mirror body holding portion is visible from above a rear portion of the handle bar support portion. Accordingly, for example, when a rider turns on the blinker (including a hazard lamp) in a state where the mirror body holding portion of the rear-view mirror is fell down to the storing position and the rider moves the vehicle by pushing while gripping a steering handle bar in such a state, there is a possibility that light of the blinker enters the eyes of the rider.

A vehicle-body front structure of a motorcycle, in which all features of the preamble of claim 1 are disclosed, is described in JP 2011 255725 A.

Further, there is known from JP 2006 069299 A a vehicle-body front structure of a motorcycle in which rear-view mirrors and blinkers are supported on a handle bar support portion.

It is an object of the invention to provide a vehicle-body front structure of a motorcycle where light of a blinker minimally directly enters eyes of a rider even when the rider turns on the blinker in a state where a mirror body holding portion of a rear-view mirror is displaced to a storing position.

This object is achieved by a vehicle-body front structure according to the enclosed independent claim 1. Advantageous features of the present invention are defined in the corresponding subclaims.

The invention according to claim 1 is directed to a vehicle-body front structure of a motorcycle where a steering handle bar is supported on a handle bar support portion of a front portion of a vehicle body frame in a rotatable manner, and left and right rear-view mirrors which reflect an area behind the vehicle body are supported on the handle bar support portion, wherein the left and right rear-view mirrors respectively include: a mounting base portion which is mounted on a handle bar support portion side; a mirror body holding portion which holds a mirror body; and a connecting mechanism which connects the mirror body holding portion to the mounting base portion in a displaceable manner between a use position and a storing position, a blinker is mounted on a surface of the mirror body holding portion on a side opposite to a surface of the mirror body holding portion on which the mirror body is arranged, and the mirror body holding portion is configured such that the mirror body is directed upward and the blinker is directed downward when the mirror body holding portion is at the storing position.

With the present invention, when the mirror body holding portion of the rear-view mirror is displaced to the storing position, the mirror body on the mirror body holding portion is directed upward and the blinker is directed downward. Accordingly, even when a rider turns on the blinker in such a state and moves a vehicle by pushing while gripping the steering handle bar, light of the blinker minimally directly enters the eyes of the rider.

Further, the mirror body holding portion can be positioned at a height where the mirror body holding portion intersects with a plane which is formed by a rotation trajectory of the steering handle bar when the mirror body holding portion is at the use position, and the mirror body holding portion can be positioned below the plane when the mirror body holding portion is at the storing position.

In this case, when the mirror body holding portion is brought into a storing state by way of the connecting mechanism, the rotation trajectory of the steering handle bar is positioned above the mirror body holding portion. Accordingly, even when the rider largely steers the steering handle bar from such a state, there is no possibility that the steering handle bar interferes with the mirror body holding portion.

The connecting mechanism can further include: a connecting arm which supports the mirror body holding portion; a connecting shaft which connects the connecting arm to the mounting base portion in a rotatable manner; and a biasing spring which is arranged on a side opposite to the connecting arm with the mounting base portion sandwiched between the biasing spring and the connecting arm, and biases the connecting arm and the mounting base potion in a direction that the connecting arm and the mounting base portion are brought into pressure contact with each other, and a recessed portion is formed on a surface of the mounting base portion on a side opposite to the connecting arm, and the biasing spring is arranged in the recessed portion.

In this case, the biasing spring which biases the connecting arm and the mounting base potion in the direction that the connecting arm and the mounting base portion are brought into pressure contact with each other is arranged in the recessed portion formed on the mounting base portion and hence, the biasing spring is minimally visible from the outside even when the connecting mechanism is observed from the direction substantially orthogonal to the connecting axis. Accordingly, by adopting the above-mentioned structure as the vehicle-body front structure of the motorcycle, the external appearance quality of a vehicle can be enhanced.

According to the invention, when the mirror body holding portion of the rear-view mirror is displaced to the storing position, the mirror body on the mirror body holding portion is directed upward and the blinker is directed downward and hence, even when a rider turns on the blinker in such a state, it is possible to suppress light of the blinker from directly entering the eyes of the rider gripping a steering handle bar.

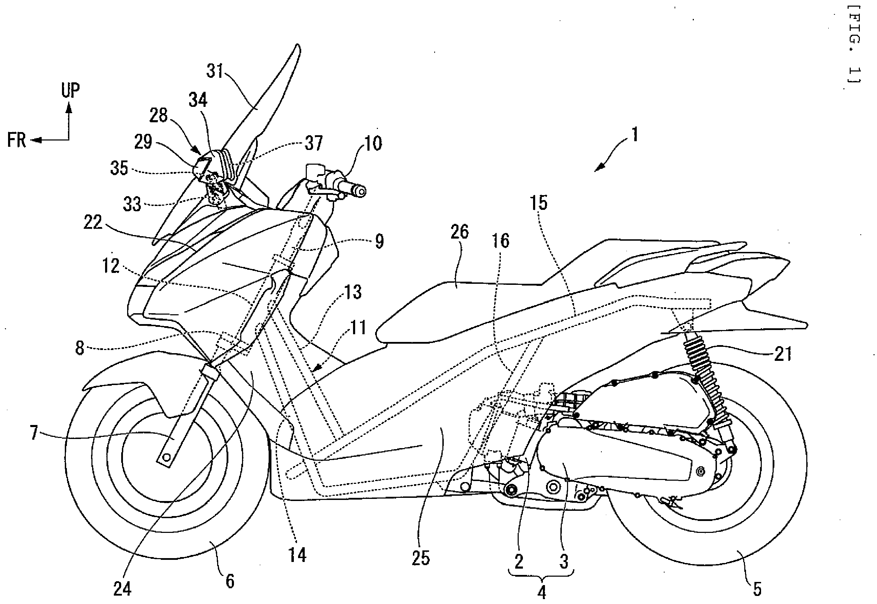

Fig. 1 is a left side view of a motorcycle according contact with each other, and a recessed portion is formed on a surface of the mounting base portion on a side opposite to the connecting arm, and the biasing spring is arranged in the recessed portion.

In this case, the biasing spring which biases the connecting arm and the mounting base potion in the direction that the connecting arm and the mounting base portion are brought into pressure contact with each other is arranged in the recessed portion formed on the mounting base portion and hence, the biasing spring is minimally visible from the outside even when the connecting mechanism is observed from the direction substantially orthogonal to the connecting axis. Accordingly, by adopting the above-mentioned structure as the vehicle-body front structure of the motorcycle, the external appearance quality of a vehicle can be enhanced.

According to the invention, when the mirror body holding portion of the rear-view mirror is displaced to the storing position, the mirror body on the mirror body holding portion is directed upward and the blinker is directed downward and hence, even when a rider turns on the blinker in such a state, it is possible to suppress light of the blinker from directly entering the eyes of the rider gripping a steering handle bar.
Fig. 1 is a left side view of a motorcycle according to one embodiment of the invention.
Fig. 2 is a plan view of a front portion of a vehicle body of the motorcycle according to one embodiment of the invention.
Fig. 3 is a side view of the front portion of the vehicle body of the motorcycle according to one embodiment of the invention.
Fig. 4 is a cross-sectional view taken along a connecting axis of a connecting mechanism according to one embodiment of the invention.
Fig. 5 is a perspective view of the front portion of the vehicle body of the motorcycle according to one embodiment of the invention.
Fig. 6 is a plan view of the front portion of the vehicle body of the motorcycle according to one embodiment of the invention.

Hereinafter, one embodiment of the invention is explained by reference to drawings. In the drawings used for the explanation made hereinafter, an arrow FR indicates a front side of a vehicle, an arrow UP indicates an upper side of the vehicle, and an arrow LH indicates a left side of the vehicle.

Fig. 1 is a left side view showing a scooter-type motorcycle 1 to which a vehicle-body front structure according to an embodiment is applied.

The motorcycle 1 includes a swing unit 4 which is an integral body formed of an engine 2 and a power transmission mechanism 3. A rear wheel 5 is supported on a rear portion of the swing unit 4 in a rotatable manner, and a front wheel 6 is arranged in front of the swing unit 4. The front wheel 6 is supported on lower portions of a pair of left and right front forks 7 in a rotatable manner, and a bridge 8 extends between upper portions of the left and right front forks 7. A steering shaft 9 which is a steering axle is joined to the bridge 8, and a steering handle bar 10 is joined to an upper end portion of the steering shaft 9. The steering shaft 9 is supported on a head pipe 12 which is a handle bar support portion on a front portion of a vehicle body frame 11 in a rotatable manner.

The vehicle body frame 11 includes: the head pipe 12; a pair of left and right main frames 13 which extends rearward and downward from an upper portion of the head pipe 12; a pair of left and right down frames 14 which extends rearward and downward from a lower portion of the head pipe 12, is bent at a lower portion of the vehicle and extends rearward; a pair of left and right rear frames 15 which extends rearward and upward from rear portions of the main frames 13; and a pair of left and right rear support frames 16 which extends rearward and upward from rear portions of the down frames 14 and is connected to the rear frames 15.

A front portion of the swing unit 4 is supported on the rear support frames 16 in a rotatable manner. Due to such a configuration, the swing unit 4 is made swingable in the vertical direction. Cushion units 21 are disposed between the rear wheel 5 and the rear frames 15.

The motorcycle 1 is covered by a vehicle body cover which is constituted of a plurality of cover members made of a synthetic resin or the like.

A front cover 22 which is formed into a streamline shape being tapered frontward as viewed in a top plan view is arranged in front of the steering shaft 9. The front cover 22 covers a front side and both sides of the steering shaft 9.

The front cover 22 opens rearward, and a space formed between left and right rear portions of the front cover 22 is closed by an inner cover not shown in the drawing which covers the steering shaft 9 from behind.

A center cover 24 which extends along the longitudinal direction of the vehicle body is connected to a lower portion of the inner cover. The center cover 24 mainly covers the main frames 13 and the down frames 14 from above and both sides.

A pair of left and right rear side covers 25 is connected to a rear portion of the center cover 24. The rear side covers 25 extend toward a rear side of the vehicle body along the rear frames 15 respectively. A seat 26 on which an occupant sits is supported on upper portions of the left and right rear side covers 25 in a straddling manner.

A front surface of the front cover 22 is formed into an inclined shape such that the front surface extends rearward as the front surface extends upward as viewed in a side view. A windbreak 31 which extends rearward and upward along the front cover 22 is mounted on an upper portion of the front surface of the front cover 22. Further, an opening not shown in the drawing for exposing a headlight not shown in the drawing frontward is formed in the front surface of the front cover 22 on a lower side.

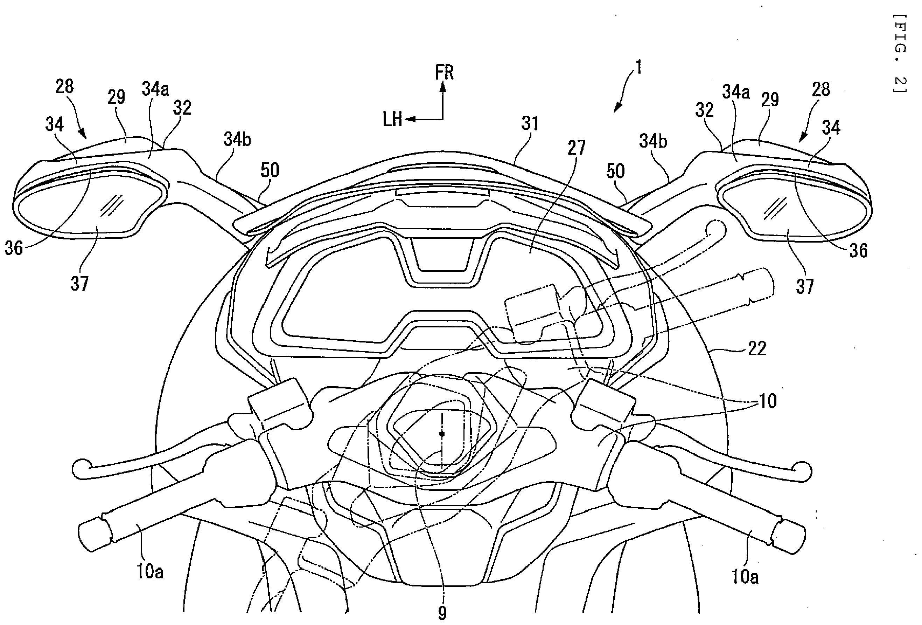

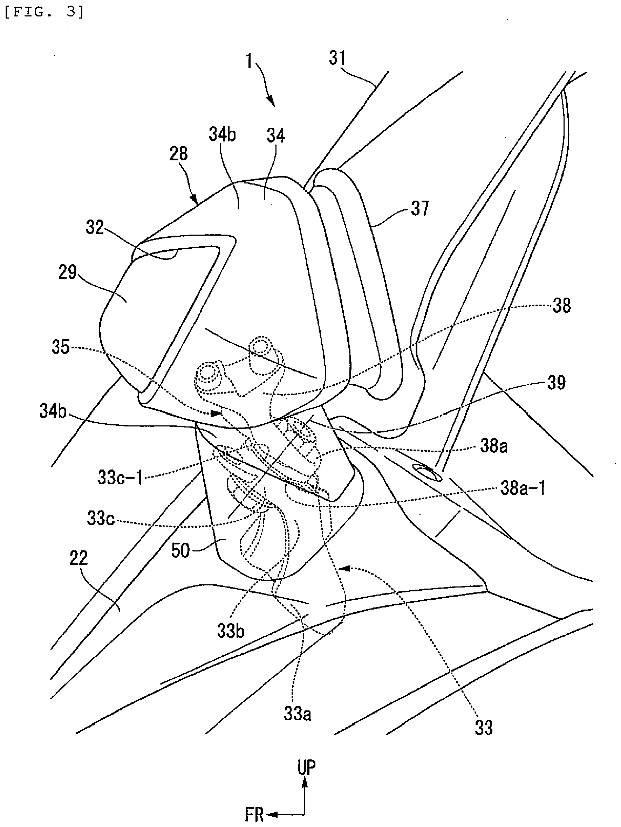

Fig. 2 is a view of the steering handle bar 10 and a front cover 22 portion on the front portion of the vehicle body as viewed from above, and Fig. 3 is a view showing a portion of a left side surface of the front cover 22 in an enlarged manner.

A display panel 27 (see Fig. 2) such as a speedometer and left and right rear-view mirrors 28 are mounted on the head pipe 12 shown in Fig. 1 which is a handle bar support portion. A blinker 29 (direction indicator lamp) described in detail later is integrally assembled into the respective left and right rear-view mirrors 28.

The display panel 27 is arranged on a front side of an upper portion of the steering shaft 9 (head pipe 12), and a front surface side of the display panel 27 is covered by the front cover 22 and the windbreak 31.

As shown in Fig. 3, the left and right rear-view mirrors 28 respectively include: a support bracket 33 which forms a mounting base portion; a mirror housing 34 which forms a mirror body holding portion; and a connecting mechanism 35 which connects the mirror housing 34 to the support bracket 33 in a displaceable manner between a use position and a storing position.

The support bracket 33 includes: a fixed member 33a on a proximal end side which is fixed to the vehicle body frame by fastening; a support strut portion 33b which extends outward in the width direction and upward from the fixed member 33a; and a connecting member 33c which is integrally formed on an extension end of the support strut portion 33b. A connecting seat face 33c-1 which is directed toward an oblique rear upper side of the vehicle body is formed on the connecting member 33c. The connecting seat face 33c-1 has an inclined surface which extends toward a rear lower side from a front upper side as viewed in a side view.

The mirror housing 34 is configured such that an opening 36 having an approximately rectangular shape with four corners rounded is formed in a rear surface of the mirror housing 34 which faces a rear side of the vehicle body when the rear-view mirror 28 is used, and a mirror body 37 which reflects an area behind the vehicle body is held by the opening 36 portion. Further, the mirror housing 34 has a round bulging portion 34a which projects toward a front side from a rear surface side, and a cylindrical portion 34b is mounted on an end portion of the bulging portion 34a on an inner side in the vehicle width direction in a projecting manner.

A cutaway portion 32 is formed on the bulging portion 34a. The cutaway portion 32 is formed on a front surface side of the bulging portion 34a which faces a front side of the vehicle body when the rear-view mirror 28 is used. The above-mentioned blinker 29 is mounted on the cutaway portion 32. The blinker 29 has an irradiation surface thereof directed toward a front side of the vehicle body in a normal use state, and is visible from a rear side and a side of the vehicle.

A connecting arm 38 is mounted on an end portion of the bulging portion 34a of the mirror housing 34 on an inner side in the vehicle width direction in a projecting manner in a state that the connecting arm 38 passes through the inside of the cylindrical portion 34b. A connecting member 38a which is connected to the connecting member 33c of the support bracket 33 in a rotatably displaceable manner is formed on a projecting end of the connecting arm 38. A connecting seat face 38a-1 which faces the connecting seat face 33c-1 on a support bracket 33 side in an opposed manner is formed on the connecting member 38a of the connecting arm 38. The connecting arm 38 and the support bracket 33 are connected to each other in a rotatable manner about a connection axis 39 in a state where the connecting seat faces 38a-1, 33c-1 abut against each other.

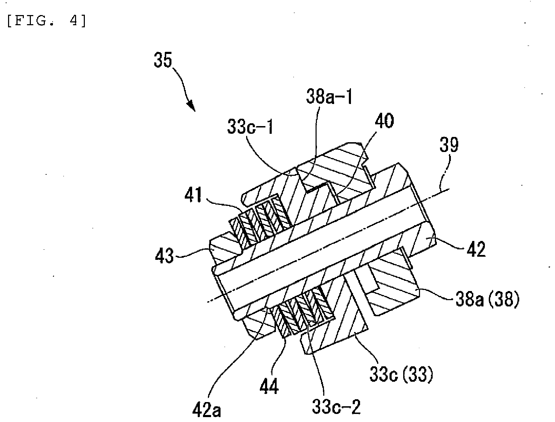

Fig. 4 is a cross-sectional view of a connecting portion between the connecting arm 38 and the support bracket 33 taken along the connection axis 39.

The connecting seat face 38a-1 of the connecting arm 38 and the connecting seat face 33c-1 of the support bracket 33 are connected to each other by a bolt 42 which has a center axis thereof aligned with the connection axis 39, and a nut 43 which is fixed to a shaft end of the bolt 42. The nut 43 is fixed to the bolt 42 by being brought into contact with a stepped portion 42a which is formed on a distal end of a shaft portion of the bolt 42. A plurality of concavo-convex engaging portions 40 are formed between the connecting seat face 38a-1 of the connecting arm 38 and the connecting seat face 33c-1 of the support bracket 33 along a peripheral region around the connection axis 39.

Further, a circular-shaped recessed portion 33c-2 is formed on a surface of the connecting member 33c of the support bracket 33 on a side opposite to the connecting seat face 33c-1 so as to surround the shaft of the bolt 42. A biasing spring 41 which constantly biases the connecting seat faces 38a-1, 33c-1 in the direction that the connecting seat faces 38a-1, 33c-1 are brought into pressure contact with each other is housed in the recessed portion 33c-2. One end portion of the biasing spring 41 is brought into contact with a bottom surface in the recessed portion 33c-2, and the other end portion of the biasing spring 41 is brought into contact with the nut 43 by way of a washer 44. With such a configuration, the connecting seat face 38a-1 of the connecting arm 38 and the connecting seat face 33c-1 of the support bracket 33 are engaged with each other by concavo-convex engagement by receiving a force of the biasing spring 41, and such an engagement state is maintained unless a large external force is applied from the outside.

In the case of this embodiment, the connecting mechanism 35 which connects the mirror housing 34 to the support bracket 33 in a displaceable manner is constituted of: the connecting seat faces 38a-1, 33c-1 of the connecting arm 38 and the support bracket 33 including the concavo-convex engaging portions 40; the biasing spring 41 which constantly biases the connecting seat faces 38a-1, 33c-1 in the direction that the connecting seat faces 38a-1, 33c-1 are brought into pressure contact with each other; and the like.

Further, a cylindrical cover wall 50 which projects from the front cover 22 along the extending direction of the support bracket 33 is mounted in a projecting manner on an outer peripheral side of the support bracket 33 which is fixed to the vehicle body frame. An end surface of the cover wall 50 and an end surface of the cylindrical portion 34b of the mirror housing 34 are arranged so as to abut against each other. In this case, both end surfaces are inclined at the same angle as an inclination angle of the connecting seat faces 38a-1, 33c-1 so as to prevent the end surfaces from interfering with each other when the connecting arm 38 rotates relative to the support bracket 33 about the connection axis 39.

When the rear-view mirror 28 is used at the time of driving the vehicle, the mirror housing 34 is brought into a state where the mirror housing 34 projects outward maximum in the vehicle width direction. The position of the mirror housing 34 at this stage becomes the above-mentioned use position. On the other hand, to narrow a projection width of the mirror housing 34 at the time of parking the vehicle or the like, the mirror housing 34 is brought into the maximum closest position to a front cover 22 side by rotating the mirror housing 34 about the connection axis 39. The position of the mirror housing 34 at this stage becomes the above-mentioned storing position.

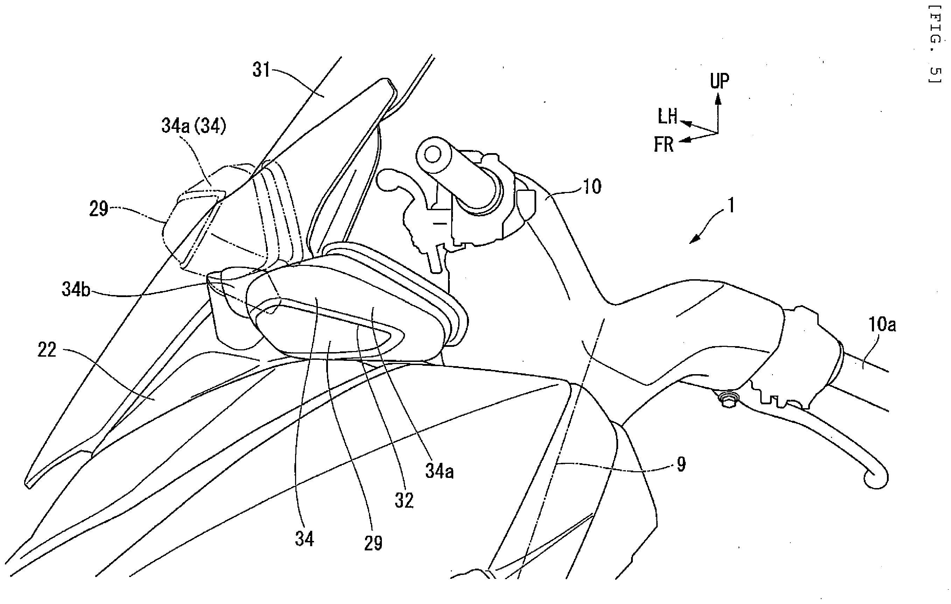

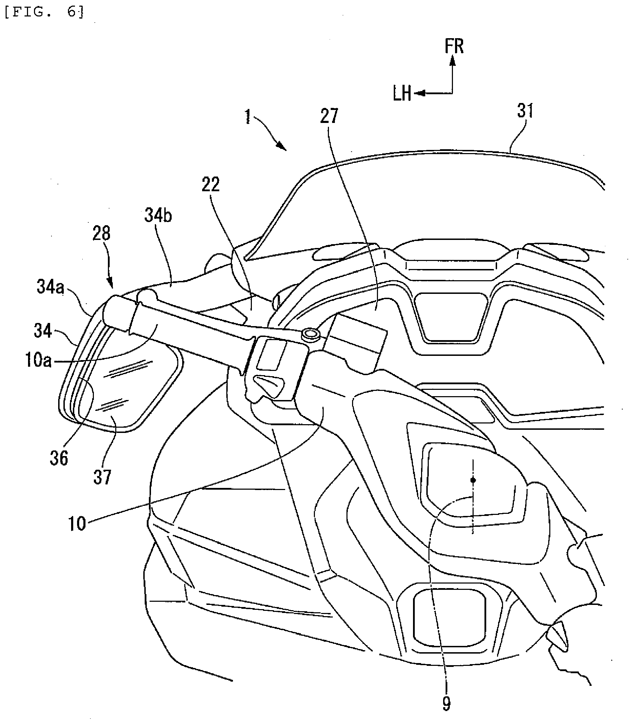

Fig. 5 is a view of the front portion of the vehicle body as viewed from a left rear lower side when the mirror housing 34 of the rear-view mirror 28 is made to fall down to the storing position, and Fig. 6 is a view of the front portion of the vehicle body as viewed from above when the mirror housing 34 of the rear-view mirror 28 is made to fall down to the storing position in the same manner.

The rear-view mirror 28 of this embodiment is configured such that, when the mirror housing 34 is at the normal position, the mirror body 37 is substantially directed to a rear side of the vehicle body, and the blinker 29 is substantially directed to a front side of the vehicle body. On the other hand, the rear-view mirror 28 is set such that, when the mirror housing 34 is operated so as to assume the storing position, the mirror housing 34 is rotated about the connection axis 39 so that the mirror body 37 is directed upward and the blinker 29 is directed downward.

The rear-view mirror 28 of this embodiment is also set such that, when the mirror housing 34 is operated so as to assume the storing position, the mirror housing 34 is displaced toward an area below the vehicle body in a rotatable manner. Further, the rotational displacement of the mirror housing 34 about the connection axis 39 is set such that, as shown in Fig. 5, when the mirror housing 34 is at the use position, the mirror housing 34 is positioned at a height where the mirror housing 34 intersects with a plane which passes a rotation trajectory of an end portion 10a of the steering handle bar 10, and when the mirror housing 34 is at the storing position, the mirror housing 34 is positioned below the plane which passes the rotation trajectory of the end portion 10a of the steering handle bar 10.

As has been described heretofore, in the vehicle-body front structure of the motorcycle 1 according to this embodiment, the mirror housing 34 of the rear-view mirror 28 can be stored in the direction that the mirror housing 34 approaches the front cover 22 due to an operation by a rider and hence, the mirror housing 34 is made to minimally interfere with the surrounding of the mirror housing 34 at the time of parking a vehicle or the like and, at the same time, a space for parking the vehicle can be made narrow.

Further, in a case of this vehicle-body front structure, when the mirror housing 34 of the rear-view mirror 28 is displaced to the storing position, the mirror body 37 on the mirror housing 34 is directed upward, and the blinker 29 is directed downward. Accordingly, even when a rider turns on the blinker 29 in a state where the mirror housing 34 is stored such that the mirror housing 34 approaches the front cover 22 and grips the steering handle bar 10 and moves by pushing the vehicle in such a state, light of the blinker 29 minimally directly enters the eyes of the rider which are positioned above the mirror housing 34. Accordingly, even when a rider turns on the blinker 29 and moves the vehicle by pushing at night or the like, there is no possibility that light of the blinker 29 obstructs the operation by the rider.

In the vehicle-body front structure according to this embodiment, the rotational displacement of the mirror housing 34 is set such that, when the mirror housing 34 is at the storing position, the mirror housing 34 is positioned below the plane which passes the rotation trajectory of the end portion 10a of the steering handle bar 10 and hence, even when the steering handle bar 10 is rotated maximum in a state where the mirror housing 34 is stored, it is possible to prevent the end portion 10a of the steering handle bar 10 from interfering with the mirror housing 34.

Further, in the vehicle-body front structure according to this embodiment, the connecting mechanism 35 which connects the mirror housing 34 to the support bracket 33 in a rotatable manner includes: the connecting arm 38 which supports the mirror housing 34; the bolt 42 which is a connecting shaft; and the biasing spring 41 which biases the connecting arm 38 and the support bracket 33 in the direction that the connecting arm 38 and the support bracket 33 are brought into pressure contact with each other. Further, the recessed portion 33c-2 is formed on the surface of the connecting member 33c of the support bracket 33 on a side opposite to the connecting seat face 33c-1, and the biasing spring 41 is arranged in the recessed portion 33c-2.

Accordingly, in the case where the vehicle-body front structure according to this embodiment is adopted, the biasing spring 41 is minimally visible from the outside even when the connecting mechanism 35 is observed from the direction substantially orthogonal to the connection axis 39. Accordingly, by adopting the above-mentioned structure as the vehicle-body front structure of a motorcycle, the external appearance quality of the vehicle can be enhanced.

The invention is not limited to the above-mentioned embodiment, and various design changes are conceivable without departing from the gist of the invention.
1: motorcycle
10: steering handle bar
11: vehicle body frame
12: head pipe (handle bar support portion)
28: rear-view mirror
29: blinker
33: support bracket (mounting base portion)
33c-2: recessed portion
34: mirror housing (mirror body holding portion)
35: connecting mechanism
37: mirror body
38: connecting arm
41: biasing spring
42: bolt (connecting shaft)

## Claims

1. A vehicle-body front structure of a motorcycle where a steering handle bar (10) is supported on a handle bar support portion (12) of a front portion of a vehicle body frame (11) in a rotatable manner, and
left and right rear-view mirrors (28) which reflect an area behind the vehicle body are supported on the handle bar support portion (12), wherein
the left and right rear-view mirrors (28) respectively includes: a mounting base portion (33) which is mounted on a handle bar support portion (12) side; a mirror body holding portion (34) which holds a mirror body (37); and a connecting mechanism (35) which connects the mirror body holding portion (34) to the mounting base portion (33) in a displaceable manner between a use position and a storing position, and
a blinker (29) is mounted on a surface of the mirror body holding portion (34) on a side opposite to a surface of the mirror body holding portion (34) on which the mirror body (37) is arranged,
**characterized in that**
the mirror body holding portion (34) is configured such that the mirror body (37) is directed upward and the blinker (29) is directed downward when the mirror body holding portion (34) is at the storing position.

2. The vehicle-body front structure of a motorcycle according to claim 1, wherein
the mirror body holding portion (34) is positioned at a height where the mirror body holding portion (34) intersects with a plane which is formed by a rotation trajectory of the steering handle bar (10) when the mirror body holding portion (34) is at the use position, and the mirror body holding portion (34) is positioned below the plane which is formed by the rotation trajectory of the steering handle bar (10) when the mirror body holding portion (34) is at the storing position.

3. The vehicle-body front structure of a motorcycle according to claim 1 or claim 2, wherein the connecting mechanism (35) includes:
a connecting arm (38) which supports the mirror body holding portion (34);
a connecting shaft (42) which connects the connecting arm (38) to the mounting base portion (33) in a rotatable manner; and
a biasing spring (41) which is arranged on a side opposite to the connecting arm (38) with the mounting base portion (33) sandwiched between the biasing spring (41) and the connecting arm (38), and biases the connecting arm (38) and the mounting base potion (33) in a direction that the connecting arm (38) and the mounting base portion (33) are brought into pressure contact with each other, and
a recessed portion (33c-2) is formed on a surface of the mounting base portion (33) on a side opposite to the connecting arm (38), and the biasing spring (41) is arranged in the recessed portion (33c-2).

## Patentansprüche

1. Fahrzeugaufbau-Frontkonstruktion eines Motorrads, bei dem ein Lenker (10) an einem Lenker-Halteabschnitt (12) des vorderen Bereichs eines Fahrzeugrahmens (11) in einer drehbaren Weise gehalten wird, und
ein linker und ein rechter Rückspiegel (28), die einen Bereich hinter dem Fahrzeugaufbau spiegeln, an dem Lenker-Halteabschnitt (12) gehalten werden, wobei der linke und der rechte Rückspiegel (28) jeweils aufweisen: ein Befestigungs-Grundabschnitt (33), der an einer Seite des Lenker-Halteabschnitts (12) befestigt ist; ein Spiegelkörper-Halteabschnitt (34), der einen Spiegelkörper (37) hält; und einen Verbindungsmechanismus (35), welcher den Spiegelkörper-Halteabschnitt (34) mit dem Befestigung-Grundabschnitt (33) in einer zwischen einer Benutzungsposition und einer Aufbewahrungsposition verstellbaren Weise verbindet, und
ein Blinker (29) an einer Fläche des Spiegelkörper -Halteabschnitts (34) an einer Seite gegenüberliegend einer Fläche des Spiegelkörper -Halteabschnitts (34) befestigt ist, an dem der Spiegelkörper (37) angeordnet ist,
**dadurch gekennzeichnet, dass**
der Spiegelkörper -Halteabschnitt (34) so eingerichtet ist, dass der Spiegelkörper (37) nach oben gerichtet ist und der Blinker (29) nach unten gerichtet ist, wenn der Spiegelkörper -Halteabschnitt (34) in seiner Aufbewahrungsposition ist.

2. Fahrzeugaufbau-Frontkonstruktion eines Motorrads gemäß Anspruch 1, wobei der Spiegelkörper -Halteabschnitt (34) in einer Höhe positioniert ist, in der der Spiegelkörper -Halteabschnitt (34) sich mit einer Fläche schneidet, welche durch eine Rotations-Bewegungsbahn des Lenkers (10) gebildet wird, wenn der Spiegelkörper - Halteabschnitt (34) in seiner Benutzungsposition ist, und der Spiegelkörper - Halteabschnitt (34) unter der Ebene positioniert ist, welche durch die Rotations-Bewegungsbahn des Lenkers (10) gebildet wird, wenn der Spiegelkörper - Halteabschnitt (34) in seiner Aufbewahrungsposition ist.

3. Fahrzeugaufbau-Frontkonstruktion eines Motorrads gemäß Anspruch 1 oder Anspruch 2, wobei der Verbindungsmechanismus (35) aufweist:
den Verbindungsarm (38), der den Spiegelkörper -Halteabschnitt (34) hält;
eine Verbindungswelle (42), welche den Verbindungsarm (38) an dem Befestigungs-Grundabschnitt (33) in einer drehbaren Weise verbindet; und
eine Vorspannfeder (41), die an einer Seite gegenüberliegend dem Verbindungsarm (38) angeordnet ist, wobei der Befestigungs-Grundabschnitt (33) von der Vorspannfeder (41) und dem Verbindungsarm (38) eingeschlossen ist, und die den Verbindungsarm (38) und den Befestigungs-Grundabschnitt (33) in einer Richtung vorgespannt, dass der Verbindungsarm (38) und der Befestigungs-Grundabschnitt (33) in Druckkontakt miteinander gebracht werden, und
ein ausgenommener Abschnitt (33c-2) an einer Fläche des Befestigungs-Grundabschnitts (33) an einer Seite gegenüberliegend dem Verbindungsarm (38) gebildet ist und die Vorspannfeder (41) in dem ausgenommenen Abschnitt (33c-2) angeordnet ist.

## Revendications

1. Structure avant de corps de véhicule d'une motocyclette où une barre de guidon de direction (10) est supportée sur une portion de support de barre de guidon (12) d'une portion avant d'une ossature de corps de véhicule (11) de manière rotative, et
des miroirs rétroviseurs gauche et droit (28) qui reflètent une zone à l'arrière du corps de véhicule sont supportés sur la portion de support de barre de guidon (12), dans laquelle
les miroirs rétroviseurs gauche et droit (28) comportent respectivement : une portion de base de montage (33) qui est montée d'un côté portion de support de barre de guidon (12) ; une portion de maintien de corps de miroir (34) qui maintient un corps de miroir (37) ; et un mécanisme de raccordement (35) qui raccorde la portion de maintien de corps de miroir (34) à la portion de base de montage (33) de manière déplaçable entre une position d'utilisation et une position de stockage, et
un clignotant (29) est monté sur une surface de la portion de maintien de corps de miroir (34) sur un côté opposé à une surface de la portion de maintien de corps de miroir (34) sur laquelle est agencé le corps de miroir (37),
**caractérisée en ce que**
la portion de maintien de corps de miroir (34) est configurée de sorte que le corps de miroir (37) soit dirigé vers le haut et que le clignotant (29) soit dirigé vers le bas lorsque la portion de maintien de corps de miroir (34) est à la position de stockage.

2. Structure avant de corps de véhicule d'une motocyclette selon la revendication 1, dans laquelle
la portion de maintien de corps de miroir (34) est positionnée à une hauteur où la portion de maintien de corps de miroir (34) coupe un plan qui est formé par une trajectoire de rotation de la barre de guidon de direction (10) lorsque la portion de maintien de corps de miroir (34) est à la position d'utilisation, et la portion de maintien de corps de miroir (34) est positionnée en dessous du plan qui est formé par la trajectoire de rotation de la barre de guidon de direction (10) lorsque la portion de maintien de corps de miroir (34) est à la position de stockage.

3. Structure avant de corps de véhicule d'une motocyclette selon la revendication 1 ou la revendication 2, dans laquelle le mécanisme de raccordement (35) comporte :
un bras de raccordement (38) qui supporte la portion de maintien de corps de miroir (34) ;
un arbre de raccordement (42) qui raccorde le bras de raccordement (38) à la portion de base de montage (33) de manière rotative ; et
un ressort de sollicitation (41) qui est agencé sur un côté opposé au bras de raccordement (38) avec la portion de base de montage (33) intercalée entre le ressort de sollicitation (41) et le bras de raccordement (38), et sollicite le bras de raccordement (38) et la portion de base de montage (33) dans une direction selon laquelle le bras de raccordement (38) et la portion de base de montage (33) sont amenés en contact par pression l'un avec l'autre, et
une portion évidée (33c-2) est formée sur une surface de la portion de base de montage (33) sur un côté opposé au bras de raccordement (38), et le ressort de sollicitation (41) est agencé dans la portion évidée (33c-2).
